# EUROPÄISCHE PATENTSCHRIFT

(11) **EP 1 062 135 B1**
(45) Veröffentlichungstag und Bekanntmachung des Hinweises auf die Patenterteilung: **27.08.2003**
(21) Anmeldenummer: 99916790.1
(22) Anmeldetag: 15.03.1999
(51) Int. Cl.: B60R 25/04

(54) **BERECHTIGUNGSKONTROLLSYSTEM FÜR FAHRZEUGE**
AUTHORISATION VERIFICATION SYSTEM FOR VEHICLES
SYSTEME DE CONTROLE D'AUTORISATION POUR VEHICULES A MOTEUR

(30) Priorität: 17.03.1998 DE 19811435
(43) Veröffentlichungstag der Anmeldung: 27.12.2000
(73) Patentinhaber: ROBERT BOSCH GMBH, 70442 Stuttgart (DE)
(72) Erfinder: WEIGL, Andreas, D-76351 Linkenheim-Hochstetten (DE); WEISS, Karl-Ernst, D-76275 Ettlingen (DE); SCHMITZ, Stephan, D-70197 Stuttgart (DE)
(86) Internationale Anmeldenummer: DE9900701
(87) Internationale Veröffentlichungsnummer: WO99047393

(56) Entgegenhaltungen:
- EP-A- 0 704 352
- WO-A-93/23270
- US-A- 4 754 255
- US-A- 5 508 691

## Beschreibung

### Stand der Technik

Die Erfindung betrifft ein Berechtigungskontrollsystem für Fahrzeuge, bei dem ein Steuergerät im Fahrzeug mit einem oder mehreren Benutzer-Transpondern in einem Frage-Antwort-Dialog mit aufeinander abgestimmten Kennungen die Berechtigung zum Entriegeln und Verriegeln der Fahrzeugtüren sowie zum Starten und Fahren des Fahrzeuges überprüft und freigibt oder sperrt und mit einem Master-Transponder in einem davon abweichenden Sonder-Frage-Antwort-Dialog die Berechtigung zur Durchführung von Sonderfunktionen überprüft und freigibt oder sperrt. Ein solches System ist aus der EP-A-0 835 790 bekannt.

Ein mit Benutzer-Transpondern und einem speziellen Master-Transponder arbeitendes Berechtigungskontrollsystem für Fahrzeuge ist durch die EP 97 117 784.5 bekannt. Derartige Berechtigungskontrollsysteme werden vorzugsweise als Diebstahlschutzsysteme bei Kraftfahrzeugen eingesetzt, wobei der Zugang, das Starten und das Fahren des Kraftfahrzeuges nur dem Benutzer mit einem fahrzeugindividuellen Benutzer-Transponder freigegeben wird. Es ist bei derartigen Berechtigungskontrollsystemen erforderlich, dass nach Verlust oder Diebstahl eines Benutzer-Transponders eine Möglichkeit zum Löschen solcher dem Fahrzeug durch einen Anlernprozess bekannter Benutzer-Transponder und zum Anlernen neuer und/oder der noch vorhandenen Benutzer-Transponder vorzusehen. Dabei dient der Master-Transponder zum Umprogrammieren der Kennung für den Benutzer-Transponder. Ein Datenaustausch zwischen Master-Transponder und Steuergerät zur Durchführung von erweiterten Sonderfunktionen ist jedoch nicht möglich.

Es ist Aufgabe der Erfindung, bei einem derartigen, als Zugangs- und Start/Fahrberechtigungssystem verwendeten Berechtigungskontrollsystem mit dem Master-Transponder durch den Benutzer auf einfache Weise weitere Sonderfunktionen durchzuführen.

Die Aufgabe ist durch die im Anspruch 1 aufgeführten Merkmale gelöst. Weitere Ausgestaltungen der Erfindung sind in den Unteransprüchen enthalten.

Da bei Austausch defekter Fahrzeugkomponenten, nach Verlust eines Benutzer-Transponders, Anlernen eines neuen Benutzer-Transponders und Änderungen und/oder Ergänzungen eines Sonderprogrammes nicht immer eine Vertragswerkstätte zur Verfügung steht, kann der Benutzer des Fahrzeuges, wenn er im Besitz des Master-Transponders ist, diese Vorgänge selbst vornehmen. Da der Benutzer mit dem Master-Transponder das Fahrzeug nicht starten und fahren kann, kann dieser getrennt vom Fahrzeug diebstahlsicher aufbewahrt und nur bei Bedarf verwendet werden.

Da weiterhin alle betriebsrelevanten und mit einer entsprechenden Verbindung zum Austausch von Daten versehenen elektronischen Steuergeräte eines Fahrzeugs und der fahrzeugspezifische Master-Transponder am Bandende der Produktionslinie einen gemeinsamen Code erhalten und bei einer geeigneten Systemauslegung ihre gegenseitigen Identifikationsmerkmale, z.B. Seriennummern, kennenlernen, reicht es bei gestohlenen Fahrzeugen nicht aus, nur ein einzelnes Steuergerät auszutauschen. Hierzu ist ein Anlernen ausgetauschter Komponenten an das restliche originale Fahrzeug-Elektroniksystem in Verbindung mit dem fahrzeugspezifischen Master-Transponder erforderlich.

Weitere, durch Verwendung des erfindungsgemäß ausgeführten Master-Transponders in sehr einfacher Weise nutzbare Sonderfunktionen sind etwa das Einprogrammieren von Funktionsbeschränkungen eines Fahrzeugs, beispielsweise eine maximal erlaubte Fahrstrecke oder eine eingeschränkte Nutzbarkeit von an dieses System angeschlossenen Ausstattungsgegenständen, etwa eines Mobiltelefons, sowie insbesondere bei Leihfahrzeugen das Auslesen relevanter Fahrzeugdaten. Diese Daten können die tatsächlich zurückgelegte Fahrstrecke, Tagesdatum und Uhrzeiten, Fehler sowie Daten in Art eines elektronischen Fahrtenschreibers sein.

Für nichtkommerzielle Fahrzeugbesitzer läßt sich auf die gleiche Weise ein elektronisches Fahrtenbuch führen mit Angabe des Kraftstoffverbrauchs, der gefahrenen Kilometer oder auch von während der Fahrt aufgetretenen Fehlern.

Für alle diese Sonderfunktionen ist ein Schutz gegen unbefugten Zugriff notwendig, setzen also den masterspezifischen Sonder-Frage-Antwort-Dialog voraus.

Die Erfindung wird anhand eines als Blockschaltbild dargestellten Ausführungsbeispiels näher erläutert.

Im Blockschaltbild ist mit STG ein im Fahrzeug untergebrachtes Steuergerät mit Sende- und Empfangseinrichtungen für den Datenaustausch mit einem Benutzer-Transponder U-TP und einem Master-Transponder M-TP bezeichnet. Der Datenaustausch kann nach dem Stand der Technik drahtlos oder berührungslos erfolgen. Das Steuergerät STG ist den Sicherheitsanforderungen entsprechend mit anderen betriebsrelevanten Komponenten, hier als Beispiel mit dem Motorsteuergerät MST, derart verbunden, daß alle diese Komponenten nur bei Vorliegen einer Berechtigung in Betrieb genommen werden können. Alle für den Datenaustausch notwendigen Einrichtungen wie z.B. Antennen o.ä. sind nicht gesondert dargestellt und gehören funktionell zum Steuergerät STG.

Mit dem Benutzer-Transponder U-TP kann der Zugang zu einem Fahrzeug, d.h. die Ver- und Entriegelung der Fahrzeugtüren gesteuert werden, desgleichen bei Bedarf die Berechtigung zum Starten und Fahren des Fahrzeugs. Nach Auslösen der Abfrage des Identifikationsmerkmals eines Transponders durch das Steuergerät STG, z.B. nach Ziehen eines Außentürgriffs, sendet beispielsweise bei Nutzung eines Frage-Antwort-Dialogs ZFAD das Steuergerät STG ein Fragesignal an den Benutzer-Transponder U-TP oder Master-Transponder M-TP. Antwortet der angesprochene Transponder mit dem korrekten Antwortsignal, wird die Veroder Entriegelung der Fahrzeugtüren durchgeführt oder bei Kontrolle der Fahrberechtigung die Erlaubnis zum Starten des Fahrzeugmotors und zur weiteren Nutzung des Fahrzeugs erteilt, bei falscher oder fehlender Transponder-Antwort verweigert.

in einem speziellen Sonder-Frage-Antwort-Dialog SFAD kommuniziert das Fahrzeug-Steuergerät STG nur mit dem Master-Transponder M-TP. Individuelle Kennungen von Benutzer-Transponder U-TP und Master-Transponder M-TP kennzeichnen den jeweiligen Dialog und den Umfang der Funktionen. Die Umschaltung vom normalen Zugangs-Frage-Antwort-Dialog ZFAD zum Sonder-Frage-Antwort-Dialog SFAD erfolgt durch Erkennen der spezifischen Kennung eines zum System gehörenden Master-Transponders M-TP. Dieser Master-Transponder M-TP besitzt insbesondere Sonderberechtigungen zur Durchführung sicherheitsrelevanter Funktionen, die über die normale Fahrzeugnutzung hinausgehen. Derartige Sonderfunktionen sind vor allem das Anlernen und/oder Löschen von Benutzer-Transpondern und/oder das Anlernen ausgetauschter Fahrzeugkomponenten, etwa der Motorsteuerung, des Getriebes und dgl.

Der Master-Transponder M-TP berechtigt lediglich zum Zugang, nicht aber zur Start-/Fahrberechtigung. Dadurch soll einerseits der rechtmäßige Fahrzeugbesitzer am Mitführen des Master-Transponders für normalen Fahrzeugbetrieb gehindert werden, andererseits erfordern sicherheitskritische Vorgänge wie z.B. das Anlernen ohne Werkstatteinrichtungen Zugang zum Fahrzeuginneren.

Da der Master-Transponder M-TP diese sicherheitsrelevanten Vorgänge zuläßt, ist er ein mit dem gesamten Fahrzeug am Bandende der Fertigung angelerntes einmaliges Exemplar.

Benutzer-Transponder U-TP dagegen können in größerer Stückzahl sowohl am Bandende als auch später in einer Werkstatt mit einem entsprechenden Gerät und/oder auch bei entsprechender Systemauslegung durch den Fahrzeug- und Master-Transponder-Besitzer direkt im Fahrzeug angelernt und/oder gelöscht werden. Das Einleiten der entsprechenden Vorgänge erfordert grundsätzlich das Vorhandensein des Master-Transponders M-TP, unabhängig davon, ob mittels einer Werkstatteinrichtung, z.B. eines Testers, oder nur mit den vorhandenen Fahrzeugeinrichtungen angelernt und/oder gelöscht werden soll.

Zur Vermeidung eines größeren Ausstattungsaufwands im Fahrzeug und einer auch ohne den Besuch einer Werkstatt möglichen Bedienung sieht die Erfindung vor, alle zur Durchführung der Prozeduren notwendigen Vorrichtungen wie etwa Taster, Schalter, Anzeigen und dgl. auf oder im Master-Transponder M-TP vorzusehen. Dadurch werden Vorteile hinsichtlich Platzbedarf für nur selten benötigte Einrichtungen im Fahrzeug sowie erhöhte Diebstahlschutz-Sicherheit infolge Verlagerung von für die Sonderfunktionen benötigten Komponenten (Tastatur, Menü etc.) in den besonders gekennzeichneten und einmaligen Master-Transponder M-TP erreicht. Ein Umprogrammieren mit einem anderen, ebenfalls mit Eingabeeinrichtung EG und/oder Anzeigeeinrichtung AZ ausgestatteten Master-Transponder M-TP ist wegen der dann fehlenden fahrzeugspezifischen geheimen Kennung nicht möglich, auch nicht mit einem externen Zusatzgerät. Dieses benötigt bei entsprechend ausgelegtem System ebenfalls den fahrzeugspezifischen Master-Transponder M-TP als Kennungsgeber gegenüber dem Fahrzeug, kann also lediglich die Anzeige- und/oder Eingabeeinrichtung sowie die Datenverbindung zum Fahrzeug anbieten.

Der Benutzer des Master-Transponders M-TP kann sowohl optisch (Anzeige) als auch akustisch (Sprachausgabe) geführt werden, um auswählbare Sonderfunktionen durchführen zu können. Der Master-Transponder M-TP ist vorteilhafterweise dann mit einer akustischen und/oder optischen Anzeigeeinrichtung AZ und/oder einer Eingabeeinrichtung EG versehen. Die Anzeigeeinrichtung AZ kann ein Lautsprecher, ein alphanumerisches Display oder auch eine einfache Leuchtdiode mit Blinkcode sein und die Eingabeeinrichtung EG eine Tastatur beliebiger Tastenzahl. Beide Einrichtungen sind auch einzeln möglich. Die Verwendung einer im Fahrzeug bereits vorhandenen Anzeige beliebiger Art mit einer Tastatur auf dem oder im Master-Transponder M-TP oder umgekehrt, Nutzung einer im Fahrzeug vorhandenen Tastatur etwa des Mobiltelefons mit einer Anzeigeeinrichtung im Master-Transponder M-TP ist auch möglich.

Enthält der Master-Transponder M-TP eine Informations- oder Anzeigeeinrichtung AZ, kann diese auch für andere Zwecke genutzt werden, z.B. als "Elektronischer Fahrzeugbrief", als Registriereinrichtung für Service-Intervalle oder als Nachweis gegenüber Versicherungen, wann welche Benutzer-Transponder U-TP angelernt wurden. Damit wird ein Versicherungsbetrug durch vorgetäuschten Diebstahl erschwert.

Die Energieversorgung und der Datenaustausch können sowohl über eine Verbindungsleitung als auch drahtlos, z.B. induktiv erfolgen. Besonders vorteilhaft ist im letzten Fall, wenn der Master-Transponder M-TP in eine bereits vorhandene Schreib-/Leseeinheit, etwa des Autoradios oder des Mobiltelefons eingeschoben werden kann. Andere Arten der Energieversorgung und/oder der Datenübertragung sind selbstverständlich ebenso verwendbar. So kann der Master-Transponder M-TP auch eine eigene Energiequelle in Form einer Batterie oder eines Akkumulators enthalten.

Besonders vorteilhaft ist eine im Fahrzeuginneren angebrachte Aufnahmevorrichtung für den Benutzer-Transponder U-TP, in die diese besonders zum Anlernen, aber auch zum gezielten Löschen aus dem Fahrzeug-Datenspeicher im Steuergerät STG gebracht wird. Dadurch ist gesichert, daß stets nur ein Benutzer-Transponder U-TP angelernt und/oder gelöscht wird, im Gegensatz zu Systemen mit einer Kommunikation zwischen dem Fahrzeug und einem sich irgendwo im Innenraum des Fahrzeugs befindlichen Transpondern (sog. "Handsfree"-Systeme).

Der Vorteil der Trennung im Master-Transponder M-TP und Benutzer-Transponder U-TP ist, daß der Benutzer keinen Zahlencode (PIN) behalten muß und nur derjenige Änderungen am Fahrzeug (Austausch von elektronischen Komponenten) und/oder den Zugriffsrechten vornehmen kann, der im Besitz des fahrzeugspezifischen Master-Transponders M-TP ist. Die Benutzung eines externen Zusatzgerätes allein reicht hierzu nicht aus.

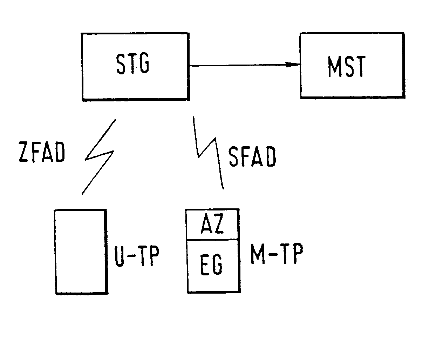

## Patentansprüche

1. Berechtigungskontrollsystem für Fahrzeuge, bei dem ein Steuergerät (STG) im Fahrzeug mit einem oder mehreren Benutzer-Transpondern (U-TP) in einem Frage-Antwort-Dialog (ZFAD) mit aufeinander abgestimmten Kennungen die Berechtigung zum Entriegeln und Verriegeln der Fahrzeugtüren sowie zum Starten und Fahren des Fahrzeuges überprüft und freigibt oder sperrt und mit einem Master-Transponder (M-TP) in einem davon abweichenden Sonder-Frage-Antwort-Dialog (SFAD) die Berechtigung zur Durchführung von Sonderfunktionen überprüft und freigibt oder sperrt,
**dadurch gekennzeichnet,**
**dass** mit dem Master-Transponder (M-TP) nur der Zugang zum Fahrzeug, aber nicht die Berechtigung zum Starten oder Fahren freigebbar ist, dass der Master-Transponder (M-TP) für die Durchführung weiterer Sonderfunktionen eine Eingabeeinrichtung (EG) und eine Anzeigevorrichtung (AZ) aufweist, und
**dass** die Sonderfunktionen neben dem Anlernen neuer und/oder das Löschen bereits angelernter Benutzer-Transponder, das Anlernen ausgetauschter Fahrzeugsteuergeräte und/oder anderer mit dem Schutzsystem verbundener elektronischer Fahrzeugkomponenten und/oder Einprogrammieren von Nutzungsbeschränkungen von Fahrzeug und/oder Ausstattungskomponenten und/oder das Auslesen von für den Fahrzeughalter wichtigen Fahrzeugdaten umfassen.

2. Berechtigungskonstrollsystem nach Anspruch 1,
**dadurch gekennzeichnet,**
**dass** mit dem Master-Transponder (M-TP) sicherheitsrelevante Fahrzeug-Sonderfunktionen anlernbar und/oder außer Funktion setzbar sind.

3. Berechtigungskontrollsystem nach Anspruch 1 oder 2,
**dadurch gekennzeichnet,**
**dass** mit dem Master-Transponder (M-TP) der Frage-Antwort-Dialog (ZFAD) und die fahrzeugspezifischen Kerndaten für Benutzer-Transponder (U-TP) anlernbar und/oder außer Funktion setzbar sind.

4. Berechtigungskontrollsystem nach einem der Ansprüche 1 bis 3,
**dadurch gekennzeichnet,**
**dass** die Bedienung der Lösch- und/oder Anlernvorgänge auch mit einem externen Zusatzgerät nur in Verbindung mit einem Master-Transponder (M-TP) erfolgen kann.

5. Berechtigungskontrollsystem nach einem der Ansprüche 1 bis 4,
**dadurch gekennzeichnet,**
**dass** der Benutzer bei der Bedienung der Lösch-, Anlern- und/oder Datenauslesevorgänge durch optische und/oder akustische Hinweise geführt wird.

6. Berechtigungskontrollsystem nach einem der Ansprüche 1 bis 5,
**dadurch gekennzeichnet,**
**dass** der Master-Transponder (M-TP) induktiv oder über eine elektrische Verbindung vom Fahrzeug mit Energie versorgt wird.

7. Berechtigungskontrollsystem nach einem der Ansprüche 1 bis 6,
**dadurch gekennzeichnet,**
**dass** der Master-Transponder (M-TP) eine Batterie oder einen Akkumulator enthält.

8. Berechtigungskontrollsystem nach einem der Ansprüche 1 bis 7,
**dadurch gekennzeichnet,**
**dass** bei Freigabe des Zugangs unter Verwendung des Master-Transponders (M-TP) Fahrzeugeinrichtungen automatisch auf Sonderbetrieb umgeschaltet werden.

9. Berechtigungskontrollsystem nach einem der Ansprüche 1 bis 8,
**dadurch gekennzeichnet,**
**dass** unter Verwendung des Master-Transponders (M-TP) Funktionen von Fahrzeugeinrichtungen geändert und/oder eingeschränkt werden.

10. Berechtigungskontrollsystem nach einem der Ansprüche 1 bis 9,
**dadurch gekennzeichnet,**
**dass** unter Verwendung des Master-Transponders (M-TP) Fahrzeugdaten und/oder Benutzungsdaten ausgelesen und einer Auswertung außerhalb des Fahrzeugs zugeführt werden.

11. Berechtigungskontrollsystem nach einem der Ansprüche 1 bis 10,
**dadurch gekennzeichnet,**
**dass** zur Bedienung von Sonderfunktionen der Master-Transponder (M-TP) als Ausweis und zur Anzeige dient, die Eingabe von Daten oder Befehlen mittels Eingabeeinrichtungen von bereits im Fahrzeug enthaltenen Ausrüstungseinheiten, z.B. Autoradio, erfolgt.

12. Berechtigungskontrollsystem nach einem der Ansprüche 1 bis 11,
**dadurch gekennzeichnet,**
**dass** zur Bedienung von Sonderfunktionen der Master-Transponder (M-TP) als Ausweis und zur Eingabe von Daten oder Befehlen dient, die Anzeige von Vorgängen und die Benutzerführung mittels Ausgabeeinrichtungen von bereits im Fahrzeug enthaltenen Ausrüstungseinheiten (z.B. Autoradio) erfolgt.

## Claims

1. Authorization verification system for vehicles, in which a controller (STG) in the vehicle checks, and enables or disables, the authorization to unlock and lock the vehicle doors as well as to start and drive the vehicle, using one or more user transponders (U-TP) in an enquiry/response dialogue (ZFAD) with identifiers which are matched to one another, and checks and enables or disables the authorization to carry out special functions using a master transponder (M-TP) in a special enquiry/response dialogue (SFAD) which differs therefrom, **characterized in that** only the access to the vehicle, but not the authorization to start or drive, can be enabled using the master transponder (M-TP), **in that** the master transponder (M-TP) has an input device (EG) and a display device (AZ) for carrying out further special functions, and **in that** the special functions comprise, in addition to the training of new and/or the deletion of already trained user transponders, the training of replaced vehicle controllers and/or of other electronic vehicle components which are connected to the protection system and/or the programming in of use restrictions of the vehicle and/or components and/or the reading out of vehicle data which is important for the holder of the vehicle.

2. Authorization verification system according to Claim 1, **characterized in that** safety-related vehicle special functions can be trained and/or deactivated using the master transponder (M-TP).

3. Authorization verification system according to Claim 1 or 2, **characterized in that** the enquiry/response dialogue (ZFAD) and the vehicle-specific core data for user transponders (U-TP) can be trained and/or deactivated using the master transponder (M-TP).

4. Authorization verification system according to one of Claims 1 to 3, **characterized in that** the operator control of the deletion processes and/or training processes can also be carried out using an external supplementary device only in conjunction with a master transponder (M-TP).

5. Authorization verification system according to one of Claims 1 to 4, **characterized in that** during the operator control of the deletion processes, training processes and/or data reading-out processes, the user is prompted by visual and/or audible indications.

6. Authorization verification system according to one of Claims 1 to 5, **characterized in that** the master transponder (M-TP) is supplied with energy by the vehicle in an inductive fashion or via an electrical connection.

7. Authorization verification system according to one of Claims 1 to 6, **characterized in that** the master transponder (M-TP) contains a battery or an accumulator.

8. Authorization verification system according to one of Claims 1 to 7, **characterized in that** when the access is enabled using the master transponder (M-TP) vehicle devices are automatically switched over to the special operating mode.

9. Authorization verification system according to one of Claims 1 to 8, **characterized in that** functions of vehicle devices are changed and/or restricted using the master transponder (M-TP).

10. Authorization verification system according to one of Claims 1 to 9, **characterized in that** vehicle data and/or use data are read out using the master transponder (M-TP) and fed to an evaluation means outside the vehicle.

11. Authorization verifications system according to one of Claims 1 to 10, **characterized in that**, for the operator control of special functions, the master transponder (M-TP) is used as a means of providing authentication and for display purposes, data or instructions being input by means of input devices of equipment units which are already contained in the vehicle, for example the car radio.

12. Authorization verification system according to one of Claims 1 to 11, **characterized in that**, for the operator control of special functions, the master transponder (M-TP) is used as a means of providing authentication and for the purpose of inputting data or instructions, the display of processes and the user prompting being carried out by means of output devices of equipment units which are already contained in the vehicle (for example the car radio).

## Revendications

1. Système de contrôle d'autorisation pour des véhicules selon lequel un appareil de commande (STG) du véhicule contrôle avec un ou plusieurs transpondeurs d'utilisateur (UTP) par un dialogue question-réponse (ZFAD) des caractéristiques qui se correspondent et libère ou bloque l'autorisation de déverrouillage et de verrouillage des portes du véhicule et du démarrage et du roulage du véhicule, et qui avec un transporteur-maître (M-TP) qui dialogue suivant un dialogue spécial question-réponse (SFAD), différent, contrôle et libère ou bloque l'autorisation d'exécuter des fonctions spéciales,
**caractérisé en ce que**
le transpondeur-maître (M-TP) ne libère que l'accès au véhicule mais non l'autorisation de démarrer ou de rouler,
le transpondeur-maître (M-TP) comporte une installation d'entrée (EG) et un afficheur (AZ) pour exécuter d'autres fonctions spéciales, et
les fonctions spéciales comprennent non seulement l'apprentissage de nouveaux transpondeurs d'utilisateur ou l'effacement de transpondeurs d'utilisateur déjà éduqués mais également l'apprentissage d'appareils de commande du véhicule qui ont été remplacés et/ou d'autres composants électroniques du véhicule reliés au système de protection et/ou la programmation de limitation d'utilisation du véhicule et/ou de composants de l'équipement et/ou la lecture de données du véhicule importantes pour le propriétaire du véhicule.

2. Système de contrôle d'autorisation selon la revendication 1,
**caractérisé en ce que**
le transpondeur-maître (M-TP) permet d'apprendre des fonctions spéciales du véhicule relevant de la sécurité et/ou de les mettre hors service.

3. Système de contrôle d'autorisation selon la revendication 1 ou 2,
**caractérisé en ce que**
le transpondeur-maître (M-TP) permet d'apprendre le dialogue question-réponse (ZFAD) et les données de base caractéristiques du véhicule pour le transpondeur-utilisateur (U-TP) et/ou les mettre hors service.

4. Système de contrôle d'autorisation selon l'une quelconque des revendications 1 à 3,
**caractérisé en ce que**
l'utilisation des opérations d'effacement et/ou d'apprentissage peut également se faire avec un appareil externe mais seulement en liaison avec un transpondeur-maître (M-TP).

5. Système de contrôle d'autorisation selon l'une quelconque des revendications 1 à 4,
**caractérisé en ce que**
lors de l'utilisation des opérations d'effacement, d'apprentissage et/ou de lecture de données, l'utilisateur est guidé par des indications optiques et/ou acoustiques.

6. Système de contrôle d'autorisation selon l'une quelconque des revendications 1 à 5,
**caractérisé en ce que**
le transpondeur-maître (M-TP) est alimenté en énergie de façon inductive ou par une liaison électrique avec le véhicule.

7. Système de contrôle d'autorisation selon l'une quelconque des revendications 1 à 6,
**caractérisé en ce que**
le transpondeur-maître (M-TP) comporte une batterie ou un accumulateur.

8. Système de contrôle d'autorisation selon l'une quelconque des revendications 1 à 7,
**caractérisé en ce qu'**
en libérant l'accès en utilisant le transpondeur-maître (M-TP), les installations du véhicule basculent automatiquement sur le fonctionnement spécial.

9. Système de contrôle d'autorisation selon l'une quelconque des revendications 1 à 8,
**caractérisé en ce qu'**
on modifie les fonctions d'installation du véhicule et/ou on les limite avec le transpondeur-maître (M-TP).

10. Système de contrôle d'autorisation selon l'une quelconque des revendications 1 à 9,
**caractérisé en ce qu'**
on lit les données du véhicule et/ou les données d'utilisation à l'aide du transpondeur-maître (M-TP) et on les extrait du véhicule pour les exploiter.

11. Système de contrôle d'autorisation selon l'une quelconque des revendications 1 à 10,
**caractérisé en ce que**
pour l'utilisation de fonctions spéciales, le transpondeur-maître (M-TP) constitue une carte d'identité et sert à l'affichage et l'entrée des données ou des ordres à l'aide des installations d'entrée se fait avec des équipements existant déjà dans le véhicule comme par exemple l'autoradio.

12. Système de contrôle d'autorisation selon l'une quelconque des revendications 1 à 11,
**caractérisé en ce que**
pour utiliser des fonctions spéciales, le transpondeur-maître (M-TP) sert de carte d'identité de même que pour entrer des données et des ordres, l'affichage des opérations et le mode d'emploi se font à l'aide d'installations d'émission, d'équipements déjà présents dans le véhicule (par exemple l'autoradio).
